# EUROPEAN PATENT APPLICATION

(11) **EP 4 749 502 A1**
(43) Date of publication of application: **27.05.2026**
(21) Application number: 24219395.1
(22) Date of filing: 12.12.2024
(51) Int. Cl.: G06F 30/12, G06F 30/13, G06F 113/20, G06F 111/02, G06F 111/18

(54) **DESIGNING AN AUTOMATED STORAGE AND RETRIEVAL SYSTEM**

(30) Priority: 22.11.2024 US 202463723720 P
(71) Applicant: AutoStore Technology AS, 5578 Nedre Vats (NO)
(72) Inventor: JOSHI, Parth, 5578 Nedre Vats (NO); FJELDHEIM, Ivar, 5578 Nedre Vats (NO)
(74) Representative: Kilburn & Strode LLP

(57) **Abstract**

The disclosure relates to a computer-implemented method for designing an automated storage and retrieval system at a storage site. The method comprises capturing a material dimension of the storage site, generating a virtual storage system based on the material dimension, and displaying, to a user, the virtual storage system synchronously overlaying a representation of the storage site. The virtual storage system comprises a virtual frame delineating a plurality of virtual storage columns for receiving virtual stacks of storage containers. The representation portrays the material dimension.

## Description

### TECHNICAL FIELD

The disclosure relates to a computer-implemented method. More particularly, it relates to a computer-implemented method for designing an automated storage and retrieval system at a storage site, a method of providing an automated storage and retrieval system for a storage site, a computer-readable medium and a computing system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Typically, storage system manufacture involves designing the arrangement of the storage system before building the storage system at a warehouse. Designing the storage system may be carried out by a designer on paper or using computer-aided design (CAD) software. For instance, the designer may use a specification of the warehouse to create a CAD schematic of a storage system for the warehouse. The storage system can then be built according to the CAD schematic. Once built, additional stakeholders may review the storage system in the warehouse and iteratively modify the storage system to meet their respective interests.

However, existing manufacturing processes may not be susceptible to further improvements. For instance, existing manufacturing processes may not allow storage systems to be further tailored to dimensions of and restrictions imposed by particular warehouses. Similarly, existing manufacturing processes may not be susceptible for efficiently manufacturing a storage system with improved operation or with improved conformity with stakeholder interests without inefficient iterative modifications during the manufacturing processes.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a display of a virtual storage system overlaying a representation of a storage site;
Fig. 5B shows a storage site and a user wearing a user device;
Fig. 6A shows a method for designing an automated storage and retrieval system according to the present disclosure;
Fig. 6B shows an extension to the method of Fig. 6A;
Fig. 6C shows an alternative extension to the method of Fig. 6A;
Fig. 7 shows a method of simulating a virtual storage system;
Fig. 8 shows a system architecture for collaborative working between users according to the present disclosure;
Fig. 9 shows a method of collaborative working between users according to the present disclosure, which may be performed as an alternative to the method of Fig. 6B or Fig. 6C;
Fig. 10 shows further method operations that can be carried out in combination with the method of Fig. 6A;
Fig. 11 shows an additional system architecture for collaborative working between users according to the present disclosure;
Fig. 12 shows an additional method of collaborative working between users according to the present disclosure, which maybe performed as an alternative or addition to the method of Fig. 6B or Fig. 6C; and
Fig. 13 shows a method for providing an automated storage and retrieval system according to the present disclosure.

### DETAILED DESCRIPTION

In overview, the disclosure relates to a computer-implemented method for designing an automated storage and retrieval system (also referred to herein as simply a 'storage system') at a storage site (also labelled herein a 'real', 'physical', 'material', or 'tangible' storage site), such as a warehouse. The method includes displaying a virtual storage system (also referred to as a 'virtually rendered storage system') to a user. Any user described herein may be considered a human user. Accordingly, any display described herein comprises a human-perceptible visual output (e.g., via a graphical user interface, GUI). The virtual storage system is a virtual model of an automated storage and retrieval system and may include a virtual frame delineating a plurality of virtual storage columns for receiving virtual stacks of storage containers. Accordingly, the virtual storage system may be considered a digital twin of a real storage system.

The virtual storage system is displayed to overlay a representation of the storage site which may, for example, be an image of a real storage site (e.g., an image captured by a camera of, or in communication with, a user device implementing the virtual environment), or a virtual storage site generated to resemble a real storage site (e.g., a digital twin of the real storage site). In some implementations therefore, the virtual storage system may be dynamically displayed in an augmented reality (AR) environment. In the AR environment, the virtual storage system is synchronously superimposed on the storage site, thereby maintaining consistent relative positions therebetween. Put generally, the methods described herein can relate to displaying, for instance, an augmented reality (AR) environment in which an image of a real storage site (e.g., a real-time image of the storage site) is overlain by a virtual storage system.

Overlaying a virtual storage system on a representation of a storage site according to the present disclosure can facilitate improved manufacturing processes. Since the representation is a representation of a real storage site, overlaying the virtual storage system on the representation can continuedly, objectively, reliably, and causally assist a user to design a virtual storage system that is tailored to the real storage site. In particular, overlaying the virtual storage system on the representation can assist a user in designing the virtual storage system by allowing the user to design the virtual storage while viewed in the context of the storage site environment. Once designed, the tailored virtual storage system can be used to assemble a corresponding real automated storage and retrieval system.

The representation of the storage site may therefore portray at least one material dimension of the storage site. For instance, the representation may portray the boundaries of a storage site, set by any walls of the storage site, a floor of the storage site, or a ceiling of the storage site. Accordingly, any of the material dimensions portrayed by the representation may comprise a distance between walls and/or between the floor and the ceiling. As such, the methods described herein may further comprise capturing the material dimension of the storage site, e.g., by scanning the storage site using a scanner such as an AR scanner or capturing an image of the storage site using a camera. In these methods, the virtual storage system may be generated for display based on the captured material dimension(s). For instance, the captured material dimension may constrain the size of the generated virtual storage system, which can further assist a user in tailoring the virtual storage system to the storage site.

Furthermore, methods of the present disclosure may additionally allow one or more users to adjust the displayed virtual storage system (for instance in real-time) as the storage system is displayed. Accordingly, the methods may include receiving an input from a user indicating a user modification to be made to the displayed virtual storage system. In response, the methods may additionally include adjusting the virtual storage system according to the user modification. As otherwise described herein, example user modifications include any of: adjusting a virtual dimension of the virtual storage system; adjusting a virtual dimension of a virtual column; adjusting a virtual shape of the virtual frame; repositioning the virtual storage system on the displayed representation; and/or selecting a virtual robotic container-handling vehicle for the virtual storage system.

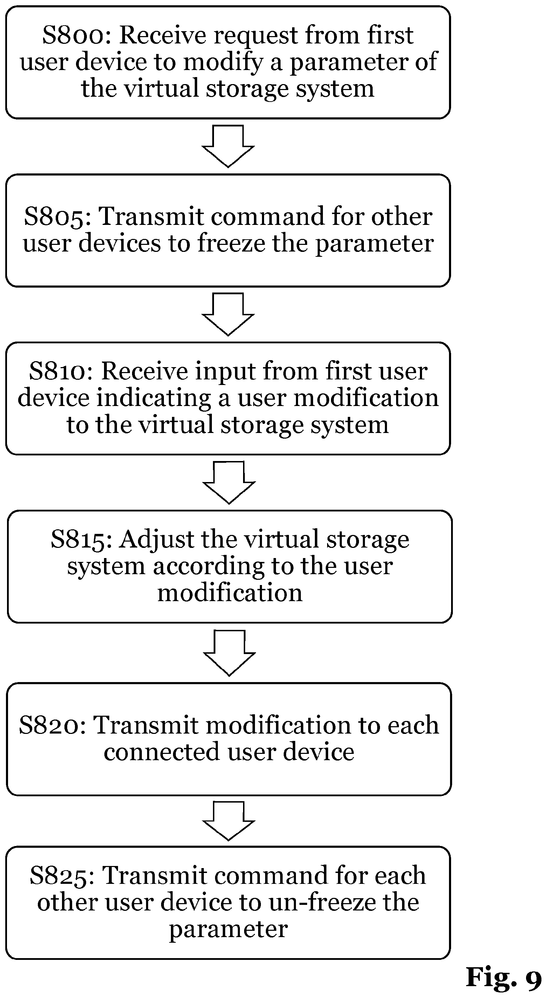

By adjusting the virtual storage system in response to a user input indicating a user modification, methods of the present disclosure can facilitate more efficient automated storage and retrieval system design processes. In particular, since the present methods can allow at least one user to modify a displayed virtual storage system, the user(s) can make adjustments and optimisations to the design of the virtual storage system before a corresponding real automated storage and retrieval system is built. Therefore, inefficiencies and additional costs associated with iteratively modifying a real automated storage and retrieval system after it is built and installed in the storage site can be avoided. In particular, the present methods allow various stakeholders (e.g., users which respectively focus on different aspects of the manufacturing process, such as fire safety, grid design, engineering considerations, regulatory alignment, and national requirements in multiple jurisdictions) - each of whom may respectively consider different aspects of storage system design - to collaboratively contribute to the designing of and/or modification of the storage system, before the physical system is built. This may be particularly important in situations in which there are tensions between different system requirements (for example a requirement for the grid to be as tall as possible to maximise system volume, and a requirement for a minimum gap to be provided above the grid for fire suppression purposes), and in which a collaborative approach between stakeholders when optimising the system in the design phase is therefore needed. Accordingly, the costs and time associated either with assembling the automated storage and retrieval system in the storage site and/or with resolving conflicting design choices between stakeholders, are kept to a minimum. In particular, changes after the system has been built are avoided, with regulatory and other compliances having been checked and confirmed before the physical system is built. Material waste and operational down-time from re-designs of a system after it has been built, are thereby also minimised. An example according to the present disclosure is provided in Fig. 9.

Furthermore, in methods of the present disclosure the virtual storage system may further include virtual robotic container-handling vehicles (also referred to herein as 'robots'), in which case a simulated operation (also referred to herein as a 'simulation') of the virtual storage system may be displayed to the user. In the simulated operation the robots are routed around the virtual storage system. In particular, each robot is routed between a respective source virtual storage column (to simulate lifting a virtual storage container therefrom) and a destination virtual storage column (to simulate lowering the virtual storage container thereto) according to a set of simulation conditions. The simulation conditions may correspond to historic order fulfilment requests recorded by a warehouse management system. During the simulation, at least one of the source and/or destination virtual storage columns may comprise a virtual port column (such as a virtual pick-up port column or a virtual drop-off port column).

By displaying a simulation of the virtual storage system, various users and stakeholders can identify inefficiencies and bottlenecks in storage system operation which arise due to the design of the virtual storage system before a real storage system is built. Notably, users and stakeholders can identify these inefficiencies and bottlenecks while viewing the virtual storage system in the full context of the storage site environment (instead of, for instance, in an isolated context of CAD software).

Accordingly, methods of the present disclosure can enable a storage system which has improved operation, whilst also avoiding manufacturing inefficiencies associated with iterative modifications by multiple users and/or stakeholders. For instance, the methods can include determining whether a robot is obstructed at any point during the simulation. In particular, the method can include detecting whether the robot is obstructed when travelling between the source and destination virtual storage columns. Such obstruction may indicate a bottleneck. The robot may be identified as being obstructed via an indication provided by a user input, or by a computing system carrying out the method. In response to determining that the robot is obstructed during the simulation, the method may include outputting, to the user, a suggestion of how to modify the virtual storage system to resolve the obstruction. Similarly, the method may include outputting a set of performance metrics (such as utilisation efficiency, idle time, etc.) to the user.

### Automated storage and retrieval system overview

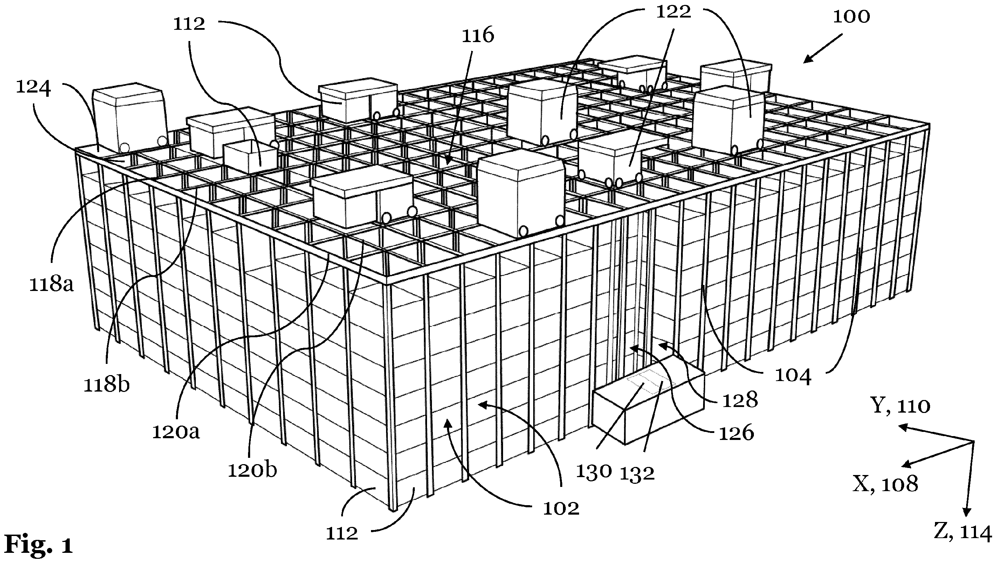

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

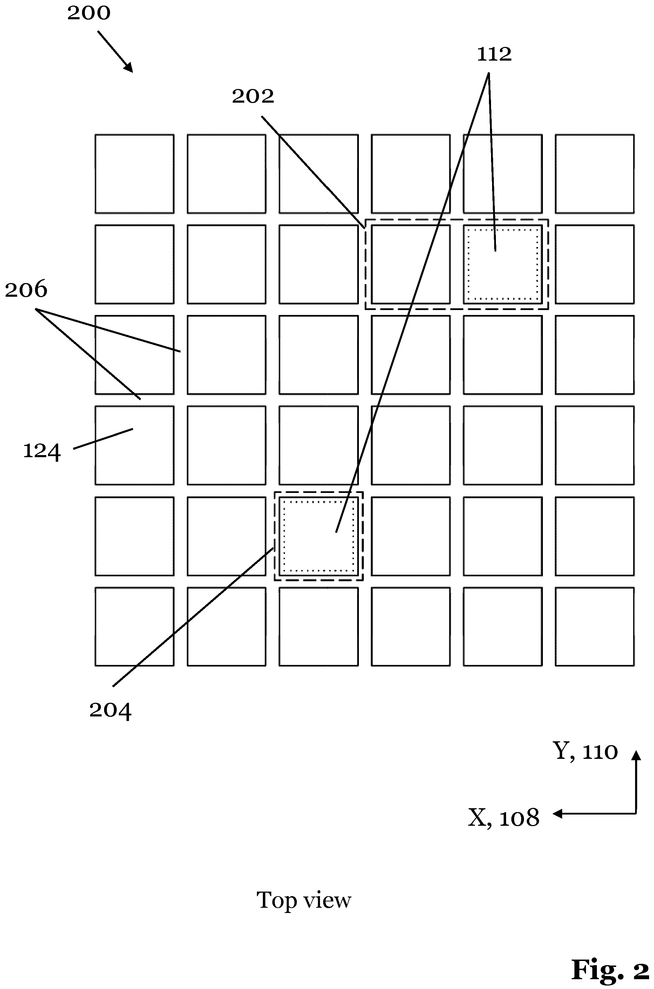

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

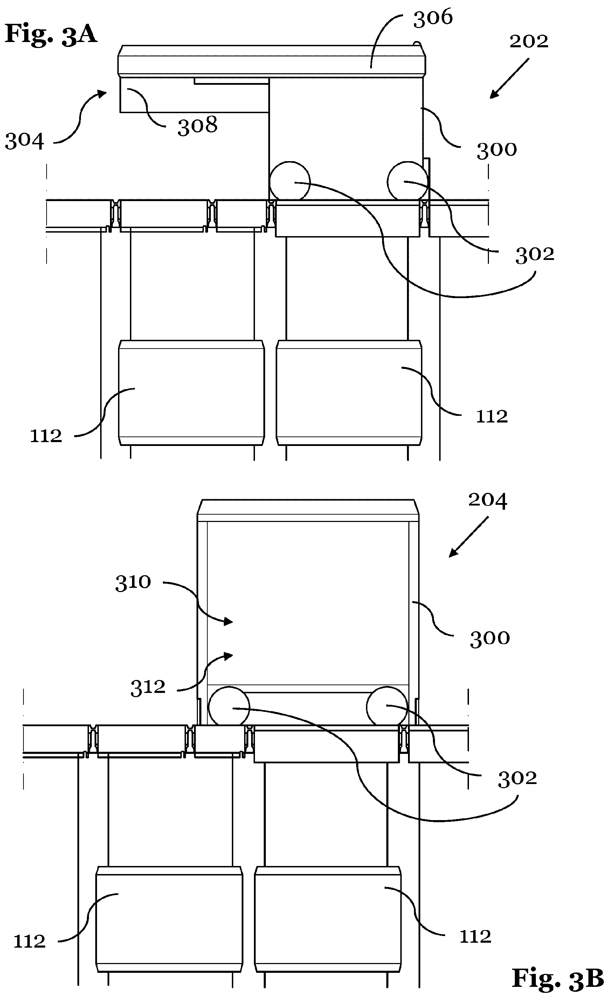

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space (e.g., a storage site) for one or more bins 112, for use, for example, while transporting the bin 112.

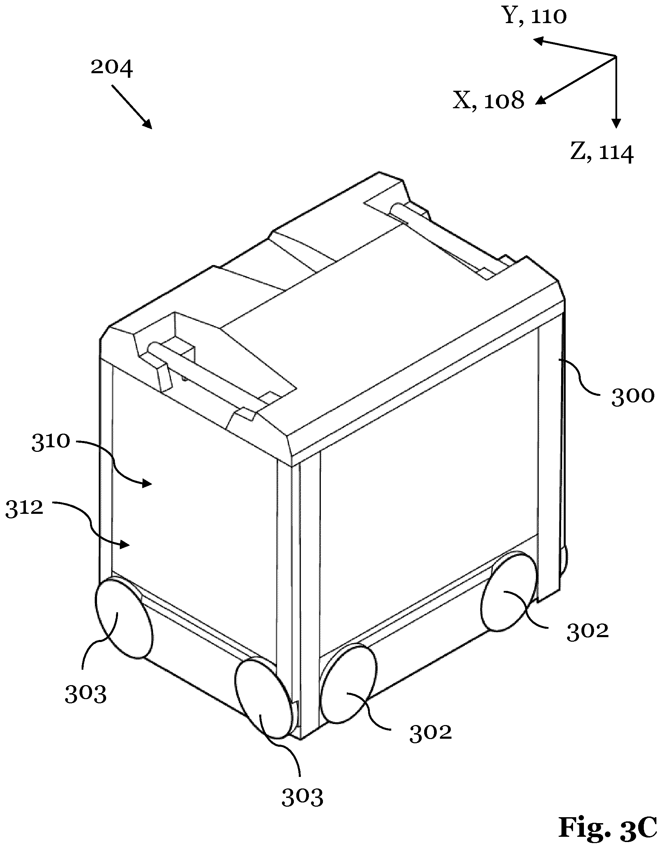

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

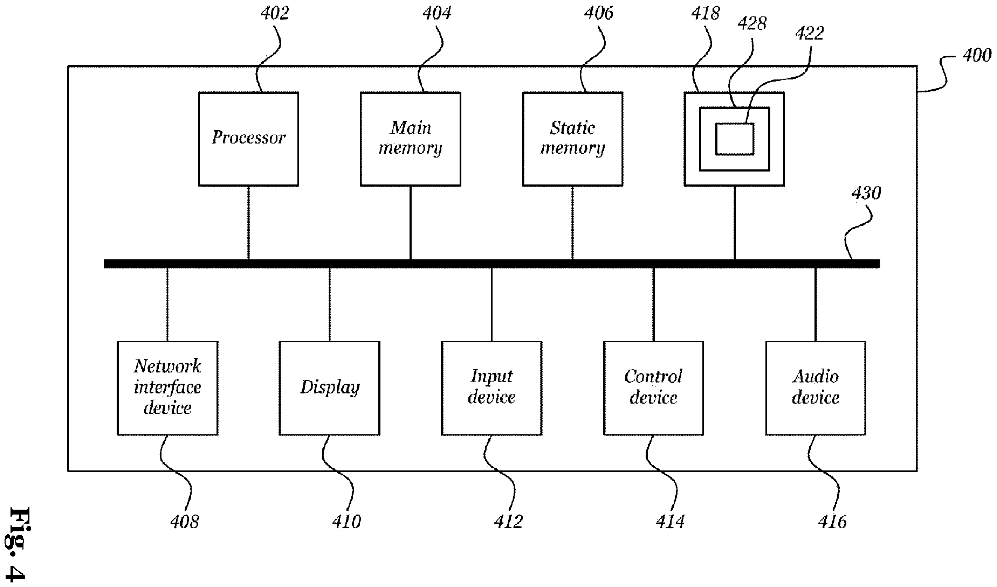

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Improved methods for designing a storage system

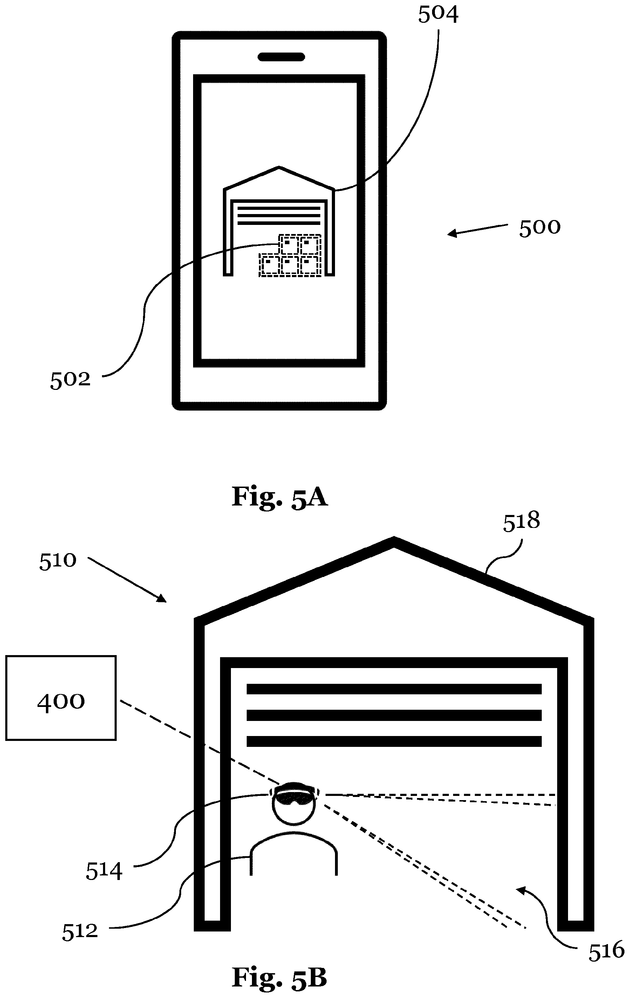

To help with understanding the present disclosure and the methods described herein, Fig. 5A shows an example of a display 500 showing a virtual storage system 502 overlaying a representation 504 of the storage site. In the example shown in Fig. 5, the user device is a handheld device (e.g., a smartphone) and the display 500 is on a graphical user interface (GUI) of the smartphone.

To help with understanding the present disclosure and the methods described herein, Fig. 5B shows an example storage site 510 in which a user 512 wearing a user device is located. In this example, the user device is an augmented reality (AR) headset 514 which is in (e.g., wireless) communication with a computing system 400 (e.g., a network interface device 408 thereof).

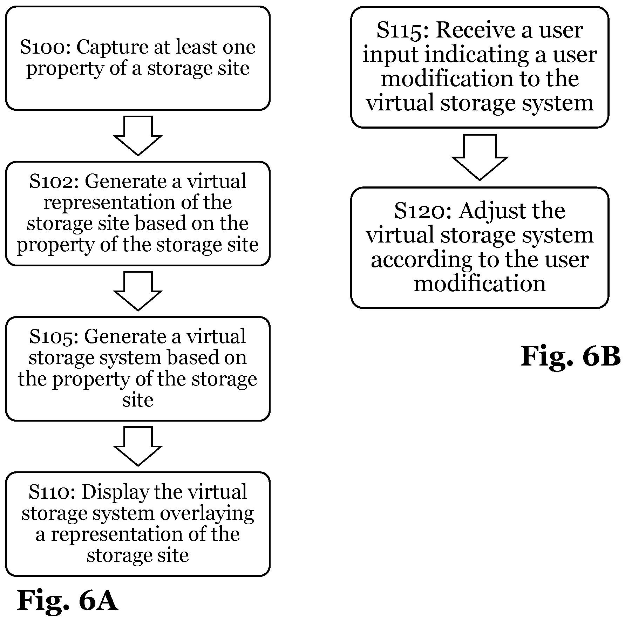

Figs. 6A and 6B depict flowcharts each showing a method for designing an automated storage and retrieval system at a storage site. At least a portion of the method is computer-implemented. In some examples, any of the operations of the method is carried out by a user device which may be a computing system, such as the computing device 400 described with respect to Fig. 4. The automated storage and retrieval system may comprise any embodiment of the storage systems otherwise described herein, particularly with respect to Figs. 1-3C. The storage site may include any suitable or desired location for an automated storage and retrieval system according to the present disclosure. For instance, the storage site may be at least a portion of a warehouse, a depot, a storehouse, a storeroom, a stockroom, and/or a storage zone at a property such as a commercial premise.

As shown in Fig. 6A, the method for designing the storage system may start at S100 at which at least one property of the storage site is captured. The property of the storage site may be captured by components or modules of a user device. The user device may be any of: a handheld device such as a smartphone; a headset such as an augmented reality (AR) headset or virtual reality (VR) headset; a head-worn wearable computer such as a pair of smart glasses; and/or any other form of AR or VR display device.

As one example, an image of the storage site may be captured by a camera (e.g., a camera of the client device). Therefore, a property of the storage site may be captured by extraction from at least one photo and/or a video feed of the storage site captured by the camera. In these examples, the property of the storage site may be extracted from the respective photo or video feed using any suitable image processing or machine vision techniques, such as spatial mapping, scene reconstruction, motion tracking, object detection and recognition, surface and edge detection, motion detection, simultaneous localization and mapping (SLAM), parallel tracking and mapping (PTAM), pattern recognition. Some such image processing techniques employ a convolutional neural network. In some implementations, the respective photo(s) and/or video feed maybe captured as a composite three-dimensional (3D) video feed generated by, for instance, a stereo camera or a range imaging device. The captured video feed may be a live (i.e., real-time) video feed of the storage site captured by, for instance, a user device.

As another example, the storage site may be captured using alternative scanning techniques such as LIDAR or 3D laser scanning. In such techniques, dimensions of the storage site are measured using time-of-flight sensors which measure distances based on the round-trip time of a light signal. Accordingly, the user device may therefore be provided with a LIDAR emitter and sensor accordingly.

The captured properties at S100 may include any material property of the storage site which could factor into the design of a storage system and/or the installation of the storage system at the storage site. In particular, the property may preferably include at least one material dimension of the storage site, such as a width of the storage site, a height of the storage site or a depth of the storage site. As used herein, a width and a depth relate to dimensions in the X and Y directions 108, 110, whereas a height relates to dimensions in the Z direction 114. Many material dimensions may be captured across (e.g., across the depth and breadth of) the storage site to form a 3D scan of the storage site, or a two-dimensional (2D) projection thereof. That is, S100 may involve capturing a 3D or 2D-projected shape of the storage site by capturing and combining material dimensions in two or three orthogonal directions. In general, any permutation of any number of material dimensions may be captured at S100, such as: only a width; a width and a height; a width and a depth; or a width, a depth and a height.

The property of the storage site captured at S100 may include further information relevant to the design and installation of the storage system at the storage site. For instance, the property may identify one or more keep clear zones at the storage site. A keep clear zone is an area of the storage site around which a storage system is to be designed. In other words, when a storage system is installed at the storage site, the keep clear zone may be absent components of the storage system.

The keep clear zone may be set to maintain accessibility in the storage site. As an example, a keep clear zone may comprise an area to remain accessible, such as a walkway, a doorway of the storage site (e.g., an entrance to and/or exit from the storage site), or a fire exit or fire door of the storage site. As another example, the keep clear zone maybe required to provide user-access to functional systems of the storage site, such as electrical outlets, fire extinguishers, user workstations, or any hazard relevant to storage system design. The keep clear zone may be demarked by markings (e.g., floor markings) or barriers at the storage site and therefore may be identified at S100. Alternatively, however, at least one of the keep clear zones may be indicated by a user via a user input and therefore may be identified at S115, as otherwise described herein.

For instance and to help with understanding the present disclosure, with reference to the example depicted in Fig. 5B, the client device (e.g., augmented reality (AR) headset 514) may comprise a camera, or a LIDAR emitter and sensor, with a three-dimensional field of view 516.

When the client device comprises a stereo camera, the camera may capture two spatially offset images of the section of the storage site 518 within the field of view 516. Each of the spatially offset images is captured by a respective lens of the stereo camera. Accordingly, material dimensions of the storage site 518 may be extracted from two spatially offset images by a processor at or in communication with the client device, e.g., a processor at computing device 400 which is in communication with the client device (e.g., via a network interface device 408). Accordingly, the client device may transfer the two spatially offset images to the network interface device 408 of the computing device 400. The processor may therefore extract the material dimensions from the spatially offset images based on a difference in parallax for surfaces of the storage site 518 across each spatially offset image.

When the client device comprises a LIDAR emitter and sensor, the client device may emit, from the LIDAR emitter, a plurality of light pulses across the field of view 516. Each light pulse is transmitted through the storage site 518 to a surface thereof. Upon reaching the surface in the storage site 518, the respective light pulses are reflected back to the client device at which the reflections are detected by the LIDAR sensor. For each pulse, the client device measures the time-of-flight between emitting the pulse and detecting the pulse. Based on this time-of-flight measurement, the distance between the user device and the respective surface can be calculated by a processor at or in communication with - e.g., a processor at computing device 400 which is in communication with the client device (e.g., via a network interface device 408). The processor can then aggregate each of the measured distances between the user device and the respective surfaces to extract the material dimension of the storage site 518 (e.g., by using distances between the user device and the respective surfaces to form a three-dimensional model of the storage site 518).

Once at least one property of the storage site is captured, the method may proceed to S102 at which a virtual representation of the storage site is generated based on the captured property (or properties) of the storage site. The virtual representation maybe generated to replicate, in a virtual space, the captured property(ies) of the storage site. That is to say, the virtual representation of the storage site may replicate the dimension(s) of the storage site, the shape of the storage site, and other features of the storage site as identified in the captured property(ies). The virtual representation may for example include any keep clear zones, any doorways, any obstructed areas, etc. In alternative examples, S102 may be dispensed with, and the method may proceed to S105.

Once the representation of the storage site has been generated at S102, the method may proceed to S105 at which a virtual storage system is generated based on the captured property (or properties) of the storage site. A virtual storage system is a virtual model of an automated storage and retrieval system. In some implementations, the virtual storage system may be considered a digital twin of an automated storage and retrieval system. Accordingly, the virtual storage system may include virtual versions of any combination of automated storage and retrieval system features otherwise described herein. In particular, the virtual storage system may include a virtual frame delineating a plurality of virtual storage columns for receiving virtual stacks of storage containers. The virtual storage system may further include a virtual margin extending beyond the periphery of the virtual frame to ensure the digital twin includes a buffer zone. A virtual margin may also be provided above the virtual frame with a height greater than the height of a robot to ensure virtual robots can move above the virtual frame unobstructed. The virtual storage system may be rendered by a computing system, such as the user device.

The virtual storage system is generated at S105 based on the captured property of the storage site such that the virtual storage system satisfies a requirement of the virtual storage site implied by the captured property. For instance, when the captured property is one or more material dimension of the storage site, the material dimension implies a maximum size of the storage system modelled by the virtual storage system in the respective direction(s) of the material dimension(s). Similarly, when the captured property comprises the shape of the storage site, the shape of the storage site implies the maximum bounds of the storage system modelled by the virtual storage system. Similarly, when the captured property comprises one or more keep clear zones at the storage site the implied requirement may be that the storage system modelled by the virtual storage system may not extend into the keep clear zone.

S100, S102 and S105 are optional in the method according to Fig. 6A and maybe excluded. The method for designing the storage system of Fig. 6A continues or starts at S110 in which a virtual storage system (such as, but not limited to, the virtual storage system generated at S105) is displayed to a user. In implementations of the present disclosure, the virtual storage system may be displayed by the user device. The user device may therefore include any suitable display for displaying images to a user, such as display device 410 described herein with respect to Fig. 4. For instance, the user device may include an LCD screen or an OLED screen and may be a touch screen. Alternatively, the user device may include a pair of smart glasses, in which case the display may comprise the lens of the smart glasses.

The virtual storage system is displayed at S110 to overlay a representation of a storage site. In some implementations, the representation of the storage site is an image of a real storage site. The image may be provided as part of a - for instance real-time - video feed. The image may be an image captured by a camera or proximity sensor of, or in communication with, the user device. Here, the image captured by the camera maybe the image captured at S100. Alternatively, the image may comprise the real storage site as imaged through (i.e., as viewed through) the lens of a pair of smart glasses. Accordingly, in these implementations, displaying the virtual storage system to overlay the image of the real storage site provides an AR environment in which a user can view the virtual storage system superimposed onto a real storage site.

In alternative implementations, the representation of the storage site is a virtual storage site generated to resemble (e.g., a digital twin of) the real storage site, e.g., the virtual representation generated at S102. This virtual storage site may be generated based on the properties of the storage site captured at S100. The virtual storage site may therefore model the storage site. In these alternative implementations, displaying the virtual storage system to overlay a virtual storage site provides a VR environment in which a user can view the virtual storage system superimposed onto a virtual model of a real storage site.

In some implementations, displaying the virtual storage system in S110 additionally comprises (e.g., actively) displaying the representation of the storage site to the user. In these implementations, a particular view of the storage site is displayed which shows the storage site at a particular orientation and position. The representation of the storage site may therefore be a dynamic representation in which the displayed view can be dynamically and/or interactively adjusted.

In some implementations, the displayed view of the storage site may be adjusted to show the storage site at different orientations and positions relative to the observer (e.g., the user). Here, the displayed view of the storage site can be dynamically and/or interactively updated. For instance, the position of the storage site relative to the observer may be set by the relative position of the user device in relation to the real storage site. Similarly, the displayed view of the storage site may be dynamically and/or interactively updated according to an input received by the user device. The input may comprise any suitable input such as: a click and drag gesture on a touchscreen, on a trackpad or by a cursor; a selection of a view from a list of options; or a change in user position, e.g., a change in position of the user device as measured by an accelerometer at the user device or by any suitable image processing or machine vision techniques at the user device (such as those otherwise described herein).

As the displayed view of the storage site is updated, so too is the displayed view of the virtual storage system. The overlay of the virtual storage system is therefore synchronised to the representation of the storage site such that the displayed virtual storage system maintains a constant position relative to the representation of the storage site (unless otherwise modified by a user), especially as the view of the storage site changes. In other words, as the view of the storage site shown on the user device is adjusted, so too is the displayed view of the displayed virtual storage site in a synchronous manner (i.e., at the same rate). As such, the display of the virtual storage system according to the present disclosure can allow users to visualise a storage system in a storage site to assist with storage system design.

Fig. 6B depicts a flowchart showing an extension to the method shown in Fig. 6A. The operations shown in Fig. 6B may be carried out in parallel with operations of the method of Fig. 6A. In particular, the operations of Fig. 6B may be carried out while the virtual storage system is displayed (e.g., at S110). Alternatively, the operations shown in Fig. 6B may be carried out in series with the method of Fig. 6A, for instance after the virtual storage system has been displayed at S110.

The flowchart of Fig. 6B includes S115 in which a user input indicating a user modification to the virtual storage system - e.g., a user modification to the virtual model of an automated storage and retrieval system generated at S105 and displayed at S110 - is received. The user input is received at the computing device which displays the virtual storage system.

The user input is provided via at least one user input device in communication with the computing device. As otherwise described with respect to Fig. 4, the input device may include an alphanumeric input device - such as a keyboard, touchscreen or virtual keyboard displayed by an AR or VR display device - and/or a cursor control device - such as a mouse, a touchscreen, or a handheld and trackable remote controller (such as an orientation-tracked remote controller) associated with a pointer position on an AR or VR display. The input device may equally include hand tracking sensors for detecting a hand position of the user and translating the hand position into a pointer position on an AR or VR display.

The virtual storage system may be displayed to the user as part of an interactive design environment. As such, the user input may comprise an interaction with an interactive design environment. For instance, the user input may comprise any adjustment to a design parameter of the displayed virtual storage system.

The design parameter may be adjusted by an alphanumeric input. For instance, numeric (e.g., quantitative) design parameters - such as dimensions, lengths, widths, quantities - may be adjusted by a numeric input indicating the new value of the numeric design parameter. Equally non-numeric (e.g., qualitative) design parameters - such as a virtual storage system shape, a virtual port column position, or a virtual robot type - may be adjusted by an alphabetical input or search.

The design parameters may also be adjusted by a cursor input (e.g., a cursor selection). For instance, a cursor input may provide a position selection. Position selection may include selecting the virtual storage system position on the representation of the storage site, a virtual port position, a virtual port column position, or a virtual robot charging station position. A cursor input may provide a dimension selection, such as a virtual storage system dimension selection, a virtual column dimension selection. A cursor input may provide a virtual storage system shape selection, such as a virtual storage system footprint selection. The cursor inputs described herein may be provided via any suitable mechanism such as by a pointing device gesture - e.g., click and drag, drag and drop, or pinch and zoom - or by a click and select operation.

The user modification indicated by the user input at S115 comprises an adjustment to the design of the virtual storage system. For instance, the user modification may comprise one or more of: adjusting a virtual dimension of the virtual storage system; adjusting a virtual dimension of a virtual column; adjusting a virtual shape of the virtual frame; repositioning the virtual storage system on the displayed representation; and/or selecting a virtual robotic container-handling vehicle for the virtual storage system.

The flowchart of Fig. 6B then proceeds to S120 in which the virtual storage system is adjusted according to the user modification indicated by the input in S115. Accordingly, the storage system displayed at S110 may become an adjusted storage system which reflects the user modification. The storage system is usually displayed at S110 concurrently with receiving the user input at S115 and therefore adjusting the virtual storage system at S120 may additionally include adjusting the display of the virtual storage system to the user.

When the user modification comprises adjusting a virtual dimension of the virtual storage system or the virtual column, the virtual dimension may be any of the width, depth and/or height of the virtual storage system or virtual column respectively. Adjusting the virtual dimension includes increasing or decreasing any of the width, depth and/or height of the respective virtual storage system or virtual column. Accordingly, the user input received at S115 may comprise an interaction with an interactive design environment to change the size of the virtual storage system or the virtual column. As examples, the user input received at S115 may comprise a numeric input indicating the new value for the virtual dimension, or a scaling of the virtual dimension via a click and drag or pinch and zoom gesture on the display.

The width or depth of the virtual storage system may be adjusted by changing the number of virtual storage columns in the virtual storage system and/or by changing the footprint (i.e., the plan view area or shape) of each virtual storage column. For instance, the width or depth of the virtual storage system may be adjusted by adding or subtracting virtual storage columns (or rows thereof) in the X or Y directions 108, 110 respectively. Equally, the width or depth of the virtual storage system may be adjusted by changing the width or depth of each virtual storage column in the X or Y directions 108, 110 respectively. In some implementations, changing a virtual dimension or footprint of a virtual storage columns may provide fine-tuning adjustments to the width or depth of the virtual storage system, whereas changing the number of virtual storage columns may provide course-tuning adjustments to the virtual storage system.

The height of the virtual storage system or of certain virtual columns may be adjusted by changing the number of layers of virtual storage containers receivable in each virtual storage column and/or by changing the height of each layer in the virtual storage column. Changing the height of each layer in the virtual storage column may provide fine-tuning adjustments, whereas changing the number of layers may provide course-tuning adjustments.

When the user modification comprises adjusting a virtual shape of the virtual frame, adjusting the virtual shape may include adjusting the footprint shape (i.e., the plan view shape) of the virtual storage system in the displayed representation of the storage site. Adjusting the footprint shape may include adding, subtracting, or changing the shape of the virtual storage columns at the periphery of the virtual storage system. Accordingly, the user input received at S115 may comprise an interaction with an interactive design environment to change the shape of the virtual frame of the virtual storage system. The user input received at S115 may comprise a selection of the virtual storage system shape, or the selection of a position in which to include an additional storage column.

When the user modification comprises repositioning the virtual storage system on the displayed representation of the storage site, repositioning the virtual storage system comprises adjusting the otherwise synchronised position of the virtual storage system relative to the representation of the storage site. Accordingly, the input indicating the user modification may comprise a selection of a new position or orientation of the virtual storage system relative to the representation of the storage site. The input may therefore comprise any of: a cursor selection or alphanumeric input in a displayed position and orientation dialogue box; and/or a click and drag gesture.

When the user modification comprises selecting a virtual robotic container-handling vehicle for the virtual storage system, selecting a virtual robotic container-handling vehicle may comprise selecting the type of virtual robotic container-handling vehicle for display in the virtual storage system. For instance, the virtual robotic container-handling vehicle may be selected from between the first, 'cantilever' type of robot 202 shown in Fig. 3A and the second, 'internal cavity' type of robot 204 shown in Figs. 3B and 3C. In some implementations, selecting the virtual robotic container-handling vehicle may comprise drafting a fleet of virtual robotic container-handling vehicles for use in the virtual storage system. Drafting the fleet may comprise selecting the total number of virtual robotic container-handling vehicles of each type.

As described herein, the virtual storage system may be a digital twin of an automated storage and retrieval system and may include virtual versions of any combination of automated storage and retrieval system features. Accordingly, in addition to a virtual frame, the virtual storage system may comprise at least one virtual robotic container-handling vehicle and further optionally at least one virtual stack of virtual storage containers.

The user of the method of Fig. 6B may be an external stakeholder, such as a safety officer, for example a fire safety officer, or a buildings safety officer. The stakeholder may be granted access to the system in order to check for compliance with safety requirements or other system requirements. The stakeholder may be responsible for a specific class of requirement, for example fire safety, buildings safety, storage capacity, or storage site compatibility (e.g., compatibility with a specific location of a door for transferring products to delivery vans). Using the method of Fig. 6B, the stakeholder can check for compliance with the requirement(s) *before* the system is built, rather than having to request changes after the system has been built, which would introduce additional costs and down-time. The stakeholder may therefore provide (e.g., at S115) inputs to modify the virtual storage system in order to ensure compliance with the requirements for which they are responsible.

In the method of Fig. 6B, the user reviews the display of the virtual storage system as output at S110, and checks that it complies with system requirements for which they are responsible. For example, where the user is a fire safety officer, they will check that sprinklers are correctly placed above the grid, or will check that there is sufficient headroom above the grid for access by firefighters, or will check that there are correctly placed escapeways present for system operators. The requirements will vary from jurisdiction to jurisdiction, and are not exhaustively listed here. However, the stakeholder will be responsible for specific requirements for the system, and will check the system for compliance with those requirements. If the user/stakeholder detects a deviation from the requirements for which they are responsible, they will at S115 request a modification to the virtual storage system, in order to remedy the issue. At S120, the virtual system is then updated to reflect the requested change.

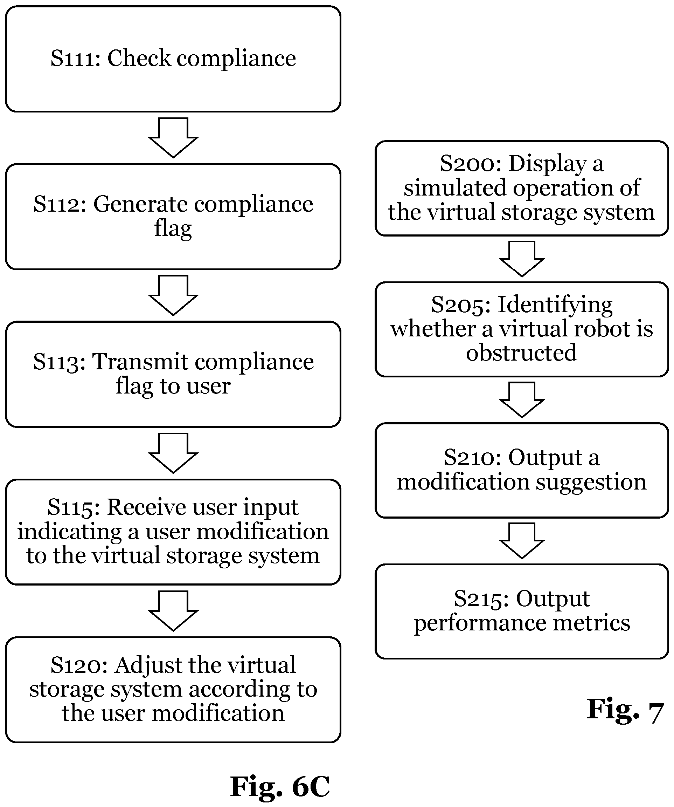

Fig. 6C shows a further method according to the present disclosure, which maybe performed instead of the method of Fig. 6B. That is, Fig. 6C represents a modification of the method shown in Fig. 6B. Operations S115 and S120 are the same in Fig. 6C as in Fig. 6B. However, in the method of Fig. 6C preliminary operations S111, S112 and S113 are also performed.

In S111, the user device analyses the configuration of the virtual storage system as displayed at S110, and checks that the configuration fulfils specific requirements for the storage system. These requirements may have been input by the user, or may have been uploaded by the user device from a library of requirements, for example a library of safety requirements that are location-specific. The requirements maybe fire safety requirements, building safety requirements, storage site requirements, or storage site compatibility requirements.

If the user device determines based on the check at S111 that the requirements are not fulfilled, it will generate a compliance flag at S112. The compliance flag identifies ("flags") to the user the location in the virtual storage system at which the compliance issue is detected, and may provide a brief description of the nature of the compliance issue. In some examples, the flag may also include a suggested system modification for addressing the compliance issue.

At S113, the flag is transmitted or displayed to the user of the user device, in order to bring the compliance issue to the user's attention. The user then reviews the compliance issue based on the information provided in the flag, and determines whether system modifications are required. If modifications are required, the user requests modification of the virtual system, and so the method proceeds to S115 and S120, which have already been described above.

The methods for designing an automated storage and retrieval system described herein may additionally include simulating the virtual storage system, such as by simulating the virtual robotic-container handling vehicles thereof. Fig. 7 depicts a flowchart showing a method of simulating the virtual storage system. The method of simulating the virtual storage system shown in Fig. 7 may be carried out as part of the method for designing an automated storage and retrieval system otherwise described with respect to Figs. 6A-6C. In particular, the virtual storage system simulation of Fig. 7 maybe at least partially carried out while the virtual storage system is displayed at S110. The virtual storage system simulation of Fig. 7 may be carried out by a user device and/or a computing system, such as the computing system 400 described with respect to Fig. 4.

As shown in Fig. 7, the virtual storage system simulation may comprise displaying a simulated operation (also referred to as a 'simulation') of the virtual storage system at S200. The simulation is a virtual replication of at least part of the operation of an automated storage and retrieval system, as otherwise described herein. The simulation may be run by the processor of the computing device carrying out the method, or otherwise by an auxiliary computing device in communication thereto.

The simulation may comprise simulating a desired retrieval of at least one virtual bin from the virtual grid by routing at least one virtual robot to a source virtual column. The source virtual column may be designated as including the storage cell where, according to a set of simulation conditions, a virtual bin is positioned and a virtual lifting device of the virtual robot is positioned (according to virtual robot type) over the corresponding virtual access opening, either adjacent or below the virtual robot.

Once at the source virtual column, the virtual robot may lower a virtual gripping device to engage, grip and lift a virtual bin to the virtual robot. The virtual robot is then routed to the destination virtual storage column to transport the virtual bin, for example, to the destination virtual storage column, as indicated in the simulation conditions.

Once at the destination virtual column, the virtual robot may lower the virtual bin into the destination virtual column. In the event that the target or designated virtual bin is indicated below other virtual bins in the virtual stack then the virtual robot or multiple virtual robots, which may be dedicated to the task, are simulated in a 'digging' operation to simulate sequentially lifting and repositioning, temporarily or permanently, virtual bins above the virtual target bin in order for it to be virtually retrieved.

Alternatively, the virtual robot need not engage, grip, and lift a virtual bin and the virtual storage system may be rendered without displaying virtual bins. Instead, once at the source virtual column, the virtual robot(s) may be kept at the virtual column for a duration corresponding to the time taken to engage, grip, and lift the virtual bin. The duration may additionally include the time taken in a digging operation. Similarly, once at the destination virtual column the virtual robot(s) may be kept at the virtual column for a duration corresponding to the time taken to lower a virtual bin into the virtual storage column.

In some implementations, the simulation may comprise retrieving multiple virtual bins from the virtual grid by routing each of a plurality of virtual robots between respective source and destination virtual column pairs. The robots may be routed between respective source and destination virtual column pairs on a schedule described in the set of simulation conditions.

As otherwise described in more detail herein, the set of simulation conditions may identify the source and destination virtual columns for each virtual robot and/or a routing schedule for the virtual robots. The identified source virtual column for each virtual robot comprises a column from which retrieval of a storage container is simulated. The identified destination virtual column for each virtual robot comprises a column into which deposit of the storage container is simulated.

Accordingly, in a pick-up simulation, the source virtual column may comprise a column indicated as holding a particular virtual storage container and the destination virtual column may comprise a port column to which to deliver the particular virtual storage container. Conversely, in a drop-off simulation, the source virtual column may comprise a port column from which to receive a particular virtual storage column (e.g., dropped thereto via a port) and the destination virtual column may comprise a virtual storage column in which to deposit the particular virtual storage container.

The simulated operation includes avoiding virtual robot collisions. Specifically, the computing system may prevent virtual robot overlap (i.e., by preventing multiple virtual robots from occupying the same space in the virtual storage system), particularly while each virtual robot is respectively routed between their respective source and destination virtual storage columns. For instance, virtual robot overlap may be prevented by monitoring a planned route for each virtual robot. The planned route is a projected and timestamped route to be taken by each virtual robot.

In the event that multiple virtual robots are projected to overlap concurrently, the planned route for at least one of the virtual robots is modified to avoid a virtual robot collision. For instance, one of the virtual robots may be kept stationary or at a reduced speed to allow another virtual robot to clear the area at which virtual robot overlap is projected. As another example, the planned route for the virtual robot may be adjusted to avoid the area in which virtual robot overlap is projected.

Accordingly, the simulation may involve identifying an obstruction at S205. In particular, S205 includes identifying whether a virtual robot is obstructed as it is routed between the respective source and destination virtual storage columns. Accordingly, operational bottlenecks in the virtual storage system, especially operational bottlenecks arising due to the design of the virtual storage system in relation to the representation of the storage site, can be easily identified.

As an example, the virtual robot may be considered obstructed if its planned route need be modified to avoid a projected virtual robot overlap. As another example, the virtual robot may be considered obstructed if its planned route between its respective source virtual storage column and destination virtual storage column is not a direct route between the source virtual storage column and the destination virtual storage column. A direct route is a route which passes a minimum distance between the source virtual storage column and the destination virtual storage column (accounting for constraints in the virtual robot's freedom of movement). For instance, a direct route may be any of the possible routes (e.g., via the virtual rail system of the virtual storage system) which pass over a minimum number of virtual storage columns. As another example, the virtual robot may be considered obstructed if its planned route between its respective source virtual storage column and destination virtual storage column involves holding the virtual robot stationary or at a reduced speed.

In some implementations, identifying whether the virtual robot is obstructed at S205 may include receiving a user input identifying an obstruction. A user, viewing the displayed simulation of the storage system, may see that the simulation displays an obstruction. In response, the user may provide an input to the user device to indicate the presence of the obstruction. As an example, the user input may include selecting that an obstruction is present. As another example, the user input may include selecting the location of the obstruction on the virtual storage system using a cursor control device. As another example, the user input may include a description of the obstruction, provided via an alphanumeric input device.

In some implementations, the user device may automatically identify whether the virtual robot is obstructed at S205. For instance, the user device may automatically detect if a virtual robot's planned route is modified. As another example, the user device may automatically detect if the virtual robot's planned route between its respective source virtual storage column and destination virtual storage column is not a direct route between the source virtual storage column and the destination virtual storage column. As another example, the user device may automatically detect if the planned route between its respective source virtual storage column and destination virtual storage column involves holding the virtual robot stationary or at a reduced speed.

In response to identifying whether the virtual robot is obstructed at S205, the method may include outputting a modification suggestion at S210. The modification suggestion comprises a suggested adjustment to the virtual storage system to resolve the identified obstruction. The identified obstruction is considered resolved if the adjustment to the virtual storage system eliminates or otherwise reduces the extent to which the virtual robot is obstructed. For instance, if the obstruction arises due to multiple virtual robots being routed to the same virtual port column of the virtual storage system (e.g., to simulate delivering multiple virtual containers to a port), the modification suggestion may comprise adding an additional port column to the virtual storage system. As another example, if the obstruction arises due to a narrowing of the virtual storage system, the modification suggestion may comprise widening the virtual storage system. The modification suggestion is determined by the computing device, for instance by using an optimisation algorithm, such as a regression optimization.

The modification suggestion is output at S210 to the display of the user device for confirmation by the user. In response to receiving a confirmatory input from the user, the modification suggestion may be applied to the virtual storage system in the same way as the user modifications otherwise described herein (particularly with respect to Fig. 6B and 6C).

Either in parallel to or in series with S205 and/or S210, the method shown in Fig. 7 may additionally include outputting a set of performance metrics of the simulated operation at S215. The performance metrics may be output to the display of the user device, or to an external processor networked with the user device. The set of performance metrics may include any suitable quantitative parameters indicating the performance of the virtual storage system during the simulation. For instance, the set of performance metrics may include: an average (e.g., mean or median) order fulfilment time, a storage system utilisation efficiency, a simulated operation cost, a robot idle time (i.e., the time during the simulation in which a robot sits idle between its source and destination virtual storage columns), and/or a collision avoidance time (i.e., the delay in fulfilment due to rerouting virtual robots to avoid a collision).

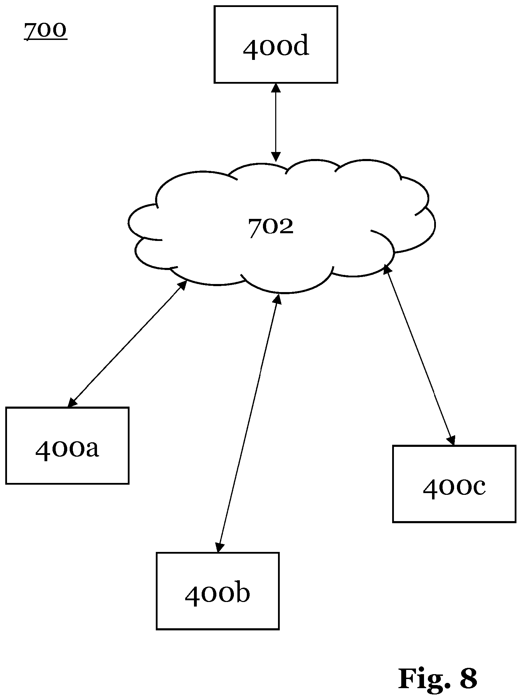

Fig. 8 shows system architecture 700 for implementing a further example of the present disclosure. As shown, the system architecture 700 comprises a plurality of user devices 400a, 400b, 400c, which communicate with a central server 400d and optionally with each other over a network 702. Each of the user devices 400a, 400b and 400c may comprise a processing system 400 according to Fig. 4. Server 400d may also comprise a processing system 400 according to Fig. 4. However, server 400d may dispense with a display 410, input device 412, control device 414, and audio device 416.

Each user device 400a, 400b, 400c is associated with a respective user of the system. Each user may be a stakeholder during the system design process. For example, the user associated with the first user device 400a may be an engineer responsible for ensuring structural integrity of the storage system; the user associated with the second user device 400b may be a fire safety officer assigned to ensuring that local safety regulations are satisfied; and the user associated with the third user device 400c may be a buildings regulation officer assigned to ensuring that buildings safety standards are upheld. These are just examples. As the reader will understand, the users may be responsible for their respective classes of system requirements, such as fire safety, building safety, etc. Furthermore, there may only be two users; or there may be more than three users. One of the users may be a manager or owner of the storage site into which the storage system is to be installed, and may only have the powers to review or approve changes made by other users (they may not have the power to modify the storage system themselves). As will be described in the paragraphs that follow, the system of Fig. 8 700, and the associated method of Fig. 9, enable the users to collaborate in order to ensure that safety and compliance requirements for the storage system are met.

Server 400d may administer the collaboration implemented by the system of Fig. 8. In particular, server 400d may be the central component of the system, and each user device 400a, 400b, 400c may communicate with the server 400d. Accordingly, the server 400d can ensure that the collaboration is correctly administered, by ensuring that updates performed at a given user device 400a are reflected at the other user devices 400b, 400c; and avoiding conflicts by ensuring that certain features or parameters remain locked - or "frozen" - at user devices 400b, 400c while the user of user device 400a is making modifications to those features or parameters. Accordingly, server 400d receives live updates from each user device 400a, 400b, 400c, and concurrently transmits live updates to each user device 400a, 400b, 400c. Accordingly, the system 700 implements a real-time collaborative environment between user devices 400a, 400b, 400c, within which users of user devices 400a, 400b and 400c are able to review, test, and request modifications to the virtual storage system.

Accordingly, the methods for designing an automated storage and retrieval system described herein may additionally include collaboratively modifying the virtual storage system between a plurality of system users/stakeholders. Fig. 9 depicts a flowchart showing a method of collaboratively modifying the virtual storage system. The method of collaboratively modifying the virtual storage system shown in Fig. 9 may be carried out as part of the method for designing an automated storage and retrieval system otherwise described with respect to Figs. 6A and 6C. In particular, the virtual storage system simulation of Fig. 9 may be at least partially carried out while the virtual storage system is displayed at S110.

The method of Fig. 9 is performed at the server 400d, and comprises a method of implementing a collaborative modification environment between users/stakeholders of the storage system. The method of Fig. 9 may be performed instead of the method of Fig. 6B or Fig. 6C. For example, the method of Fig. 9 may be performed following S110 of displaying the virtual storage system overlaying the representation of the storage site.

At S800, the server 400d receives, from a user device (e.g. from user device 400a) a request to modify a parameter of the virtual storage system. The request may comprise an indication that a user of the user device 400a intends to request modification of the parameter of the virtual storage system. The request may therefore identify the parameter which is to be modified. The parameter may be any modifiable parameter of the virtual system, e.g., any modifiable system parameter according to the present application. For example, the parameter could be a virtual dimension of the virtual storage system, a virtual dimension of a virtual column, a virtual shape of the virtual frame, a virtual position of the virtual system, a virtual position of a virtual sprinkler, or a virtual height of a virtual guardrail.

At S805, responsive to receiving the request to modify the parameter, the server 400d transmits, to the other user devices (e.g. to user devices 400b, 400c in the example of Fig. 8) a command for the other user devices to lock the parameter which is to be modified at the first user device 400a. Accordingly, the other user devices are instructed to prevent their users from being able to modify the parameter while it is already being modified by the user of the first user device 400a.

At S810, the server 400d receives input from the first user device 400a indicating a modification to the parameter of the virtual storage system by the user of the first user device 400a. This corresponds to S115, and so the description of S115 applies equally to S810.

At S815, the server 400d adjusts the parameter in the virtual storage system according to the requested modification (S810) from the first user device 400a. Again, this corresponds to S120, and so the description of S120 applies equally to S815.

At S820, the server 400d transmits the modified virtual storage system to each of the user devices (e.g. user devices 400a, 400b, 400c in Fig. 8), such that the modification is reflected at each of the user devices 400a, 400b, 400c.

Finally, at S825, the server 400d transmits a command for each of the second and third user devices to un-lock the parameter, such that the users of all devices can once again modify the parameter as required.

The method of Fig. 9 may be performed each time that any one user device 400a, 400b, 400c requests to modify a parameter of the virtual storage system. Accordingly, the method provides for synchronized collaborative modification of the virtual storage system for all users. The server 400d may, in parallel with the method of Fig. 9, implement a communication interface, such as a chat function, between the users. Accordingly, users can query each other's modifications, in order to understand the motivations behind them. In some examples, S800, S805, and S825, may be omitted. Accordingly, parallel modifying of a given parameter may not be prevented.

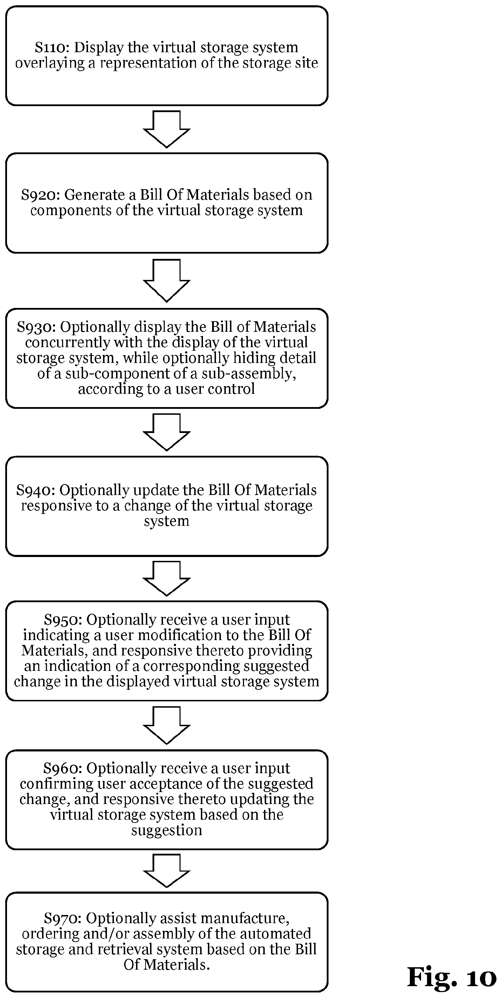

Fig. 10 shows further optional method operations that can be carried out in combination with operation S110 of the method shown in Fig. 6A, and optionally in combination with other method operations described herein in combination with S110 of Fig. 6A. As shown in Fig. 10, following the generation of a virtual storage system (which can initially be accomplished in any way that is described herein), and the displaying of said virtual storage system as in S110, in accordance with Fig. 10 at S920 a "bill of materials" (BOM) is generated (this can be performed before, after, or concurrently with the displaying at S110). Said bill of materials comprises a listing (or at least a partial listing) of components of the virtual storage system, that is to say the listing includes "virtual" components that the virtual storage system comprises, wherein each of those virtual components corresponds to a material component that would be required if a material (i.e. physical, real, non-virtual) automated storage and retrieval system were to be built/assembled according to the design of the virtual storage system. The bill of materials can be used to assist with manufacture and/or ordering and/or the obtaining of components for assembly of an automated storage and retrieval system according to the design of the virtual storage system, and it can also assist with assembly/installation.

Optionally but preferably, at S930 the bill of materials is displayed concurrently with the display of the virtual storage system, e.g. both can be displayed on the same screen at the same time, or both can be displayed on separate screens at the same time. This is advantageous because it allows a direct correlation to be seen between the design of the virtual storage system and the list of components and sub-assemblies in the bill of materials.

Furthermore, optionally at S940 the bill of materials is automatically updated in response to any change (e.g. in response to S115 in Fig. 6C) that a user makes to the design of the virtual storage system. This advantageously allows a user to more easily see and understand the impact of their design changes upon the list of components in the bill of materials, such that the user is more easily able to judge the effect of design changes on component complexity and cost, thereby promoting more efficient design of automated storage and retrieval systems.

In an example, the components which the virtual storage system (and automated storage and retrieval system that may be built according to the virtual storage system) comprises may include basic components (such as fasteners e.g. threaded nuts and bolts, or metal beams etc.) which may in turn be configured in groups to form sub-assemblies comprising those basic components as "sub-components" of such a sub-assembly (e.g. a sub-assembly for a single storage column can comprise and/or be assembled from a group of smaller "sub-components"). In such examples, the bill of materials can optionally be displayed in what can be termed a "summary form" in which the components listed in the bill of materials can include sub-assemblies which in turn comprise a number of sub-components, and in which the sub-components of the sub-assemblies can be selectively hidden in accordance with one or more user controls (e.g. by a clickable icon associated with each sub-assembly). It will be appreciated that the sub-assemblies comprised in the virtual storage system can comprise not only sub-components but also further sub-assemblies in a hierarchical manner. In this way, a user can selectively hide or reveal detail of the sub-components within each sub-assembly when viewing the bill of materials, which can advantageously make the listing easier to read and understand, by hiding less important detail, and thus enhance a user's ability to see the effect of their design changes upon component content complexity and cost.

Optionally at S950, a user input can be received, said user input indicating a user modification to the bill of materials. For example, a user may, in the listing of the bill of materials, select a particular component of a particular type, and change the type of that particular component from a first type (e.g. a steel beam) to a second type (e.g. an aluminium beam). By way of another example, a user could select a first robotic container handling vehicle of a first type (e.g. a cantilever type which lifts containers into a position for accommodating them adjacent to its motive wheels) and change its type to a second type (e.g. a type having a central cavity for accommodating storage containers). The user modifications are reflected in the virtual storage system, such that simulation can then be performed (e.g. in accordance with the description of Fig. 7) to assess changes in performance of the changed virtual storage system, e.g. changes in terms of the speed of container handling and the resulting occurrence and/or position of bottlenecks within the system during simulated operation. Responsive to any user modification, the bill of materials is also updated to show revisions to cost, weight, etc., and furthermore any violations of weight/structural strength can be identified and flagged to a user such that remedial design changes can be made, thereby improving the ability of a designer to meet system requirements.

Further optionally at S950, the user input can indicate a user modification to the bill of materials which changes a quantity of materials, for example, a user could change the quantity of a sub-assembly such as a storage column assembly, so that by simply changing a quantity of storage column sub-assemblies in the bill of materials, a user is able to add more storage columns or subtract storage columns. Such changes are reflected in the design of the virtual storage system. When the user modification is a change to a quantity of a particular component of the virtual storage system, an indication of a corresponding suggested change is displayed to the user. For example, the indication of the corresponding suggested change is displayed in the display of the virtual storage system, such as by showing a difference between the virtual storage system before and after the user modification to the bill of materials, e.g. by highlighting the components in the displayed virtual storage system that constitute the difference.

By way of more detailed example, if a user reduces the quantity of a particular component in the bill of materials, an indication can be displayed in the display of the virtual storage system, indicating (e.g. by highlighting) particular components that it is suggested are the ones which are deleted in order that the modified number of such components in the bill of materials matches the number of such components in the display of the virtual storage system. The suggestion can be based on a system requirement such as a safety requirement, such as a virtual dimension of the virtual storage system versus a material dimension of the storage site, for example based on a minimum distance between the top level of the virtual storage system and a height of the storage site, and/or a minimum distance from any component of the virtual storage system to a fire escape of the storage site. For example, if a user reduces the number of storage columns in the bill of materials, it may be suggested in the display of the virtual storage system (e.g. by highlighting particular components that it is suggested are removed) that components near to a fire escape or a roof of the storage site are preferred for removal.

By way of an alternative example, if a user increases the number of a particular component, an indication of a suggested position for the added components can be displayed in the display of the virtual storage system, e.g. by highlighting the added components or by displaying the added components in ghosted form (e.g. using reduced intensity or dotted lines). Similarly to in the above paragraph, the suggested positions of the added components can be based upon a system requirement such as a safety requirement, such as a virtual dimension of the virtual storage system versus a material dimension of the storage site, for example based on a minimum distance between the top level of the virtual storage system and a height of the storage site, and/or a minimum distance from any component of the virtual storage system to a fire escape of the storage site. For example, if a user increases the number of storage columns in the bill of materials, it may be suggested in the display of the virtual storage system that the added components are placed in a vacant area of the storage site that is spaced away from a fire escape, and/or if the maximum height of the array of storage columns in the virtual storage system has already reached a minimum distance from a roof of the storage site then sideways expansion of the array can be favoured over vertical expansion when suggesting locations for added components. Other logical extrapolations resulting from system requirements will be apparent and are intended to be included in the present disclosure.

The above examples detail a suggested change in the display of the virtual storage system in response to a user modification of a quantity of a component in the bill of materials, and specifically describe the suggested change being based on a system requirement such as a safety requirement and/or a material dimension of the storage site, however the suggested change can be based on any combination of: a material dimension of the storage site, a set of simulation conditions, performance metrics of the virtual storage system derived from simulation of the virtual storage system, an obstruction of a virtual robotic container handling vehicle identified during simulation of the virtual storage system, and/or one or more system requirements for the virtual storage system such as a safety requirement for the virtual storage system. Such suggestions advantageously assist a user (e.g. a designer of said virtual storage system) to produce a design that satisfies all of the system requirements, thereby reducing design iteration requirements, increasing the speed with which compliant storage systems can be produced, and reducing the cost of such storage systems both in terms of design cost (by reducing design time/effort) and in terms of component cost (by assisting a designer to produce more efficient designs that satisfy requirements and yet use fewer or cheaper components).

Following S950, preferably but optionally at S960, a user input can be received, the user input confirming acceptance by the user of the suggested change to the virtual storage system. Responsive to such a user input confirming acceptance of the suggested change to the virtual storage system, the virtual storage system is updated (e.g. its design is updated, and the display of its design is updated) to reflect the confirmation of the change. Alternatively, a user can reject the suggested change by making a different user-modification to the virtual storage system (e.g. in accordance with the method described with reference to S810), in which case the user-modification to the bill of materials from S950 is replaced by updated generation of the bill of materials (as per S920) based on the user-modified virtual storage system.

As shown at S970 in Fig. 10, based on the bill of materials, further operations can optionally be performed, either every time that the bill of materials changes or after an explicit user input (e.g. a user confirmation input indicating that the bill of materials is believed to be finalised). Such operations can be for assisting one or more of: manufacture; ordering; and/or assembly of a physical/material automated storage and retrieval system corresponding to the virtual storage system, and/or components thereof. Such operations can optionally include one or more of: generating or causing generation of a respective specification for one or more of the components listed in the bill of materials for a physical/material automated storage and retrieval system corresponding to the virtual storage system; causing manufacture of at least one of the components listed in the bill of materials, e.g. according to said respective specification; causing the ordering of at least one of the components listed in the bill of materials, e.g. according to said respective specification; causing the obtaining of a plurality of sub-components for an at least partial kit of parts for at least one component listed in the bill of materials, such as an at least partial kit of parts for a sub-assembly; and causing at least partial assembly of a physical/material automated storage and retrieval system corresponding to the virtual storage system. As a result, the cost of producing compliant storage systems is reduced, since time and effort required for design, manufacture, component ordering, component obtaining, system assembly and/or installation is reduced.

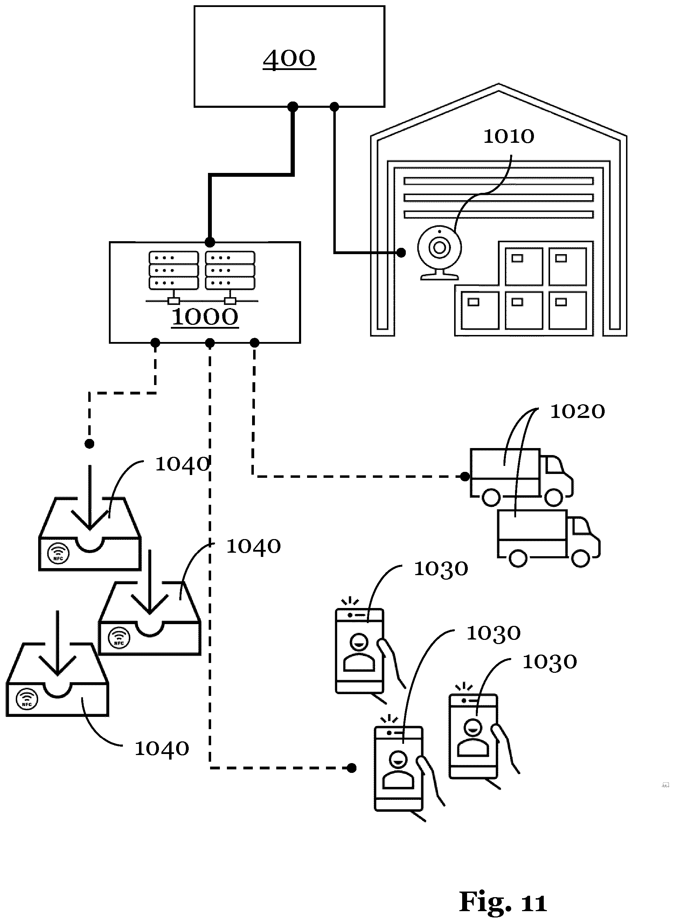

Referring now to Fig. 11, this shows an example system architecture for implementing a further example of the present disclosure, which optionally can be combined with the architecture of FIG. 8. As illustrated in Fig. 11, the processing system 400 can for example be connected to a camera 1010 which can capture an image of the storage site or another scanning system which can capture the material dimension of the storage site. In the shown example, the camera 1010 is located in the storage site.

As illustrated in Fig. 11, the processing system 400 can be connected to a warehouse management system 1000. Such a warehouse management system can control and/or track real-life operations in the storage site. As illustrated, the warehouse management system e.g. comprise one or more computer servers on which warehouse management software is running and which are connected to control and/or tracking nodes 1020-1040 in the storage site at which control and/or tracking devices are present. A control and/or tracking node may e.g. comprise a sensor which allows to track one or more parameters and/or a controller which controls operations in the storage site, and a communication module which can send data to and/or receive data from the WMS representing e.g. measurements of the sensed parameter or control data which controls operation of the controller.

For example, the warehouse management system can control and/or track one or more than one of: a storage site container transportation vehicle for transporting at least storage container, a physical storage container, a human operator, a physical item to be stored in a real-life storage container, an static mechanical handling system for moving one or more than one storage container or tangible item from a first location in the storage site to a second location in the storage site, a picking and/or packing station for adding and/or removing one or more than one tangible item from a storage container by a human or non-human operator; or an entrance where items enter and/or exit the storage site, just to name a few examples.

In Fig. 11, for instance, the warehouse management system 1000 is shown communicatively connected to e.g. trucks 1020 with goods to be stored or which are retrieved from the storage site to receive data about items entering and/or exiting the storage site, to handheld devices 1030 in the storage site to control and track operations of human operators in the storage site, e.g. by receiving input and providing instructions via a user-interface, and storage containers 1040 provided with location tracking devices, like RFID (radio-frequency identification) or NFC (near-field communication) transponders, which allow to track in the storage site the location of a storage container. However, it will be apparent that a warehouse management system 1000 may in addition or alternatively control and/or track other attributes of one or more than one of physical elements in the storage site in real-life.

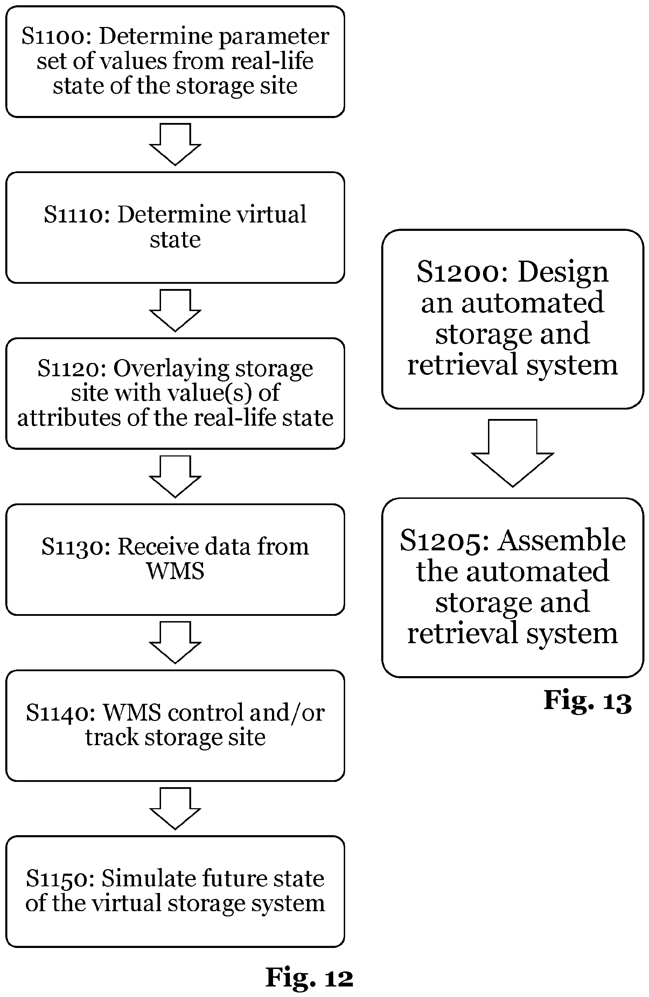

Fig. 12 shows further optional method operations that can be carried out in combination with S110 of the method shown in Fig. 6A, and optionally in combination with other operations that are described herein in combination with S110 of Fig. 6A. Such a method may for instance be performed by a processing system 400 in the system of FIG. 11.

The virtual storage system is a virtual state in which it is displayed to the user. The method may comprise, as illustrated with block S1100 in Fig. 12, determining a parameter set of values of one or more than one simulation parameter from a real-life state of the storage site, and, as illustrated with block S1110 in Fig. 12, determining the virtual state based on the parameter set.

By basing the virtual state on a parameter set of values of one or more than one simulation parameter determined from a real-life state of the storage site, specific malfunctions in the virtual storage system can be predicted, as well as futures states of the storage site when a physical storage system corresponding to the virtual storage system is present in the storage site. For example, the real-life state may be the real-life state at a first point in time and the physical state of the storage site (and thus a probability of failure) at another point in time may be determined. For example, from data representing the present real-life state and e.g. logging or other data which represents attributes of past real-life states of the storage site, a prediction of a future physical state of the storage site may be made.

The virtual state may for example be determined using the material dimensions of the storage site and a location in the storage site which corresponds to a virtual location in the storage site of the virtual system. Additionally or alternatively, for example, the storage site can contain one or more physical elements located inside the storage site, and the simulation parameter determined from attributes of one or more than one of those elements in real-life, such as its location in the storage site, its speed, its destination, etc. Examples of physical elements in the storage site can e.g. be one or more than one out of: a storage site container transportation vehicle for transporting at least storage container, a physical storage container, a human operator, a physical item to be stored in the physical storage container, an static mechanical handling system for moving one or more than one storage container or tangible item from a first location in the storage site to a second location in the storage site, a picking and/or packing station for adding and/or removing one or more than one tangible item from a storage container by a human or non-human operator; or an entrance where items enter and/or exit the storage site, just to name a few.

By determining the simulation parameter from attributes of one or more than one of physical elements in real-life, the operation of a physical storage system corresponding to the virtual storage system can be predicted. This allows to e.g. remove bottlenecks in the flow of the storage containers in the virtual storage system and thereby increase the throughput of such a physical storage system or for example avoid placing the physical storage system in a trajectory of moving physical elements.

In case the simulation parameter is determined from attributes of one or more than one of physical elements in real-life, the parameter set can for instance be determined based on one or more than one attributes of the real-life state. The attributes can be one or more of: the location of one or more than one of the physical elements, the number of a type of physical element at a specific location in the storage site, the number of a type of physical element moving between a first location and a second location in the storage site, or the number of a type of physical element at a buffer location in the storage site. Other attributes can e.g. be the path between locations in the storage site followed by physical elements or type and/or number of physical elements entering or leaving the storage site through passage in a perimeter of the storage site.

As illustrated with block S1120 in Fig. 12, in methods of the present disclosure, the displaying to the user can comprise: overlaying the representation of the storage site with a graphical representation of one or more than one values of attributes of the real-life state of the storage site. For example, in the image of the storage site information about e.g. weight of storage containers, number of items entering the storage site, the path of tangible items through the storage site (e.g. of in-site transporting vehicles or humans) may be indicated. Thereby a user can perceive whether the virtual storage system would be compatible with the operations and functioning of the real-life storage site and whether or not adaptations would be required, such as for example adapting the paths and speed of vehicles to maintain a synchronized operation.

As illustrated with block S1130 in Fig. 12, methods of the present disclosure may comprise at a processing system performing the method, receiving the data representing one or more than one of the attributes of the real-life state. Such a warehouse management system can control and/or track real-life operations in the storage site. Thereby, the method described herein can be performed.

As illustrated with block S1140 in Fig. 12, in methods of the present disclosure the warehouse management system can control and/or track one or more than one of: a storage site container transportation vehicle for transporting at least storage container, a physical storage container, a human operator, a physical item to be stored in a real-life storage container, a static mechanical handling system for moving one or more than one storage container or tangible item from a first location in the storage site to a second location in the storage site, a picking and/or packing station for adding and/or removing one or more than one tangible item from a storage container by a human or non-human operator; or an entrance where items enter and/or exit the storage site. In such a case, the parameter set can for example be determined based on one or more than one attributes of the real-life state.

In addition or alternatively, the warehouse management system can e.g. control and/or track one or more of attributes in out of: the location of one or more than one of the physical elements, the number of a type of physical element at a specific location in the storage site, the number of a type of physical element moving between a first location and a second location in the storage site, or the number of a type of physical element at a buffer location in the storage site.

In addition or alternatively, the warehouse management system can e.g. control and/or track one or more of: storage site inventory, order management, human operators in the storage site; slotting and location management of physical items in the storage site; entrance or exit of physical items into or out of the storage site; and transport vehicles for transporting physical items to or away from the storage site, the transport vehicle being at an entrance or exit point and/or a yard of the storage site.

In methods of the present disclosure the real-life state of the storage site can comprise a present state of the storage site. For example, the real-life state may be directly observed, e.g. by measuring attributes thereof such as the location of one or more robots in the storage site or stereoscopic imaging.

In methods of the present disclosure the real-life state of the storage site can comprise a past state of the storage site. For example, logged date from the warehouse management system may be received and used to reconstruct past states of the storage site.

Methods of the present disclosure may comprise simulating a future state of the virtual storage system based on the parameter set. Methods of the present disclosure may comprise determining whether the future state of the virtual storage system meets a set of predetermined requirements.

Methods of the present disclosure may comprise simulating a future state of the storage site based on the real-life state. By doing so, compatibility of operations of a physical storage system corresponding to the virtual storage system and operations of the storage site can be determined. For instance, it can be determined whether a location of ports of the storage site interfere or not with routing of robots or storage containers in the storage site, whether retrieving or storing physical item in the storage system can be performed within a determined period of time etc.

In methods of the present disclosure the virtual state of the virtual storage system can be updated corresponding to changes in the real-life state of the storage site. By doing so, the interaction between operations of the storage system and the real-life state of the storage site will be more realistic and drift-off between the virtual environment and reality can be reduced, if not completely avoided. The virtual state of the virtual storage system can e.g. be real-time updated corresponding to changes in the real-time state of the storage site.

### Improved methods for providing a storage system

Fig. 13 depicts a flowchart showing a method for providing an automated storage and retrieval system which is particularly suited for a specific storage site, such as a warehouse, a depot, a storehouse, a storeroom, a stockroom, and/or a storage zone at a property such as a commercial premise. The method includes S1200 in which the automated storage and retrieval system is designed. The automated storage and retrieval system may be designed at S1200 using any of the methods otherwise described herein, particularly with respect to Figs. 6A-12. For instance, the automated storage and retrieval system may be designed in an augmented reality environment using an AR user device. Accordingly, the automated storage and retrieval system is designed according to the virtual storage system otherwise described herein. The automated storage and retrieval system is also designed to be suited for a specific storage site by displaying the virtual storage system on a representation of the specific storage site, as otherwise described herein.

Once the automated storage and retrieval system is designed, the method proceeds to S1205 at which the automated storage and retrieval system is assembled. Assembly typically follows manufacture and/or ordering and/or the obtaining of components of the automated storage and retrieval system, which tasks can be assisted in the ways described herein with reference to S970 of Fig. 10. The storage system may be assembled at the storage site, or at a remote location and then transported to the storage site. The storage system may be assembled using any suitable means. For instance, the grid of the storage system may be assembled by press fitting, snap fitting, mechanically fastening, welding, or bonding the respective grid elements together to form the storage columns for receiving the stacks of storage containers.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

Further, the present disclosure comprises the following clauses:
Clause A1. A computer-implemented method for designing an automated storage and retrieval system at a storage site, the method comprising:
   displaying, to a user, a virtual storage system synchronously overlaying a representation of the storage site, the virtual storage system comprising a virtual frame delineating a plurality of virtual storage columns for receiving virtual stacks of storage containers.
Clause A2. The computer-implemented method of clause A1, wherein the representation comprises an image of the storage site.
Clause A3. The computer-implemented method of clause A1 or clause A2, wherein the representation comprises a real-time image of the storage site.
Clause A4. The computer-implemented method of any preceding clause, the method further comprising:
   capturing a material dimension of the storage site, and
   generating the virtual storage system based on the material dimension,
   wherein the representation portrays the material dimension.
Clause A5. The computer-implemented method of any preceding clause, the method further comprising:
   receiving a user input indicating a user modification to the virtual storage system, and
   adjusting the virtual storage system according to the user modification.
Clause A6. The computer-implemented method of clause A5, wherein the adjusting comprises one or more of:
   adjusting, based on the user input, a virtual dimension of the virtual storage system;
   adjusting, based on the user input, a virtual dimension of a virtual column;
   adjusting, based on the user input, a virtual shape of the virtual frame;
   repositioning, based on the user input, the virtual storage system on the displayed representation; and/or
   selecting, based on the user input, a virtual robotic container-handling vehicle for the virtual storage system.
Clause A7. The computer-implemented method of any preceding clause wherein the virtual storage system further comprises a plurality of virtual robotic container-handling vehicles.
Clause A8. The computer-implemented method of clause A7, the method further comprising:
   displaying a simulated operation of the virtual storage system based on a set of simulation conditions, the simulated operation comprising:
      routing each virtual robotic container-handling vehicle respectively between a source virtual storage column and a destination virtual storage column,
   wherein, for each virtual robotic container-handling vehicle, the source virtual storage column and the destination virtual storage column are selected based on the set of simulation conditions.
Clause A9. The computer-implemented method of clause A8, wherein for at least one virtual robotic container-handling vehicle, the source virtual storage column or the destination virtual storage column comprises a virtual port column.
Clause A10. The computer implemented method of clause A8 or clause A9, the method further comprising identifying whether a virtual robotic container-handling vehicle is obstructed when routed between the respective source virtual storage column and the respective destination virtual storage column.
Clause A11. The computer implemented method of clause A10, wherein identifying whether the virtual robotic container-handling vehicle is obstructed comprises: receiving a user input identifying an obstruction.
Clause A12. The computer implemented method of clause A10 or clause A11, further comprising, outputting, to the user, a modification suggestion to resolve the obstructed virtual robotic container-handling vehicle.
Clause A13. The computer implemented method of any of clauses A8 to A12, further comprising outputting, to the user, a set of performance metrics of the simulated operation.
Clause M1. The computer-implemented method of any of clauses A1 to A13, the method further comprising: generating a bill of materials comprising a listing of components of the virtual storage system corresponding to material components that would be required to assemble the automated storage and retrieval system.
Clause M2. The computer-implemented method of clause M1, the method further comprising displaying the bill of materials concurrently with the displayed virtual storage system.
Clause M3. The computer-implemented method of clause M2, wherein the displaying comprises automatically updating the bill of materials responsive to a change of the virtual storage system.
Clause M4. The computer-implemented method of clause M2 or M3, wherein the displayed bill of materials is displayed in summary form.
Clause M5. The computer-implemented method of clause M4, wherein the displaying of the bill of materials in summary form comprises listing sub-assemblies in a hierarchical manner, wherein sub-assemblies are listed at a higher hierarchical level than sub-components within each sub-assembly.
Clause M6. The computer-implemented method of clause M5, wherein detail of said sub-components is selectively hidden in accordance with one or more user controls.
Clause M7. The computer-implemented method of any of clauses M1 to M6, the method further comprising receiving a user input indicating a user modification to the bill of materials, and responsive thereto providing an indication of a corresponding suggested change in the displayed virtual storage system.
Clause M8. The computer-implemented method of clause M7, wherein the provided indication shows a difference between (i) the virtual storage system before the user modification to the bill of materials and (ii) the virtual storage system after the user modification to the bill of materials.
Clause M9. The computer-implemented method of clause M7 or M8, wherein the user modification comprises a change to a type of a particular type of component.
Clause M10. The computer-implemented method of clause M7 or M8, wherein the user modification comprises a change to a quantity of a particular type of component.
Clause M11. The computer-implemented method of clause M9 or M10, wherein the particular type of component is a particular type of sub-assembly.
Clause M12. The computer-implemented method of any of clauses M7 to M11, wherein the provided indication suggests to a user one or more of the particular type of component for deletion in order that the quantity of that particular type of component shown in the bill of materials matches the quantity of that particular type of component in the virtual storage system.
Clause M13. The computer-implemented method of any of clauses M7 to M12, wherein the provided indication suggests to a user one or more potential locations for addition of the particular type of component in order that the quantity of that particular type of component shown in the bill of materials matches the quantity of that particular type of component in the virtual storage system.
Clause M14. The computer-implemented method of clause M12 or M13, wherein the suggestion is based upon one or more of a material dimension of the storage site, a set of simulation conditions, performance metrics of the virtual storage system derived from simulation of the virtual storage system, an obstruction of a virtual robotic container-handling vehicle identified during simulation of the virtual storage system, and one or more system requirements for the virtual storage system such as a safety requirement for the virtual storage system.
Clause M15. The computer-implemented method of any of clauses M12 to M14, the method further comprising receiving a user input confirming user acceptance of the suggestion, and responsive thereto updating the virtual storage system based on the suggestion.
Clause M16. The computer-implemented method of any of clauses M1 to M15, the method further comprising causing, for the automated storage and retrieval system of any one of clauses M1 to M15, based on the generated bill of materials, at least one of:
   generation of a respective specification for at least one component therefor;
   manufacture of at least one component therefor;
   ordering of at least one component therefor;
   obtaining of a plurality of sub-components for an at least partial kit of parts for at least one component thereof; and
   at least partial assembly thereof.
Clause F1. The computer-implemented method of one or more of the preceding clauses, wherein:
   the virtual storage system is in a virtual state in said displaying, to the user, the virtual storage system synchronously overlaying a representation of the storage site; and
   the method comprises:
   determining a parameter set of values of one or more than one simulation parameter from a real-life state of the storage site, and
   determining the virtual state based on the parameter set.
Clause F2. The computer-implemented method of clause F1, wherein said displaying, to the user, the virtual storage system synchronously overlaying a representation of the storage site comprises:
   overlaying the representation of the storage site with a graphical representation of one or more than one values of attributes of the real-life state.
Clause F3. The computer-implemented method of one or more of clauses F1-F2, wherein the storage site contains one or more physical elements located inside the storage site, the physical elements being one or more than one out of the group consisting of:
   a storage site container transportation vehicle for transporting at least storage container;
   a physical storage container;
   a human operator;
   a physical item to be stored in the physical storage container;
   an static mechanical handling system for moving one or more than one storage container or tangible item from a first location in the storage site to a second location in the storage site;
   a picking and/or packing station for adding and/or removing one or more than one tangible item from a storage container by a human or non-human operator; and

   an entrance where items enter and/or exit the storage space;
   and the parameter set is determined based on one or more than one attributes of the real-life state in the group consisting of:
      location of one or more than one of said physical elements,
      number of a type of physical element at a specific location in the storage site,
      number of a type of physical element moving between a first location and a second location in the storage site,
      number of a type of physical element at a buffer location in the storage site.
Clause F4. The computer-implemented method of one or more of clauses F1-F3, comprising:
   receiving data from a warehouse management system by a processing system performing the method, the warehouse management system controlling and/or tracking operations in the storage site, the data representing determined one or more than one of the attributes of the real-life state.
Clause F5. The computer-implemented method of clause F4, wherein the warehouse management system controls and/or tracks one or more than one of the group consisting of:
   the physical elements of clause F3;
   one or more of the attributes in the group of clause F3;
   storage site inventory;
   order management;
   human operators in the storage site;
   slotting and location management of physical items in the storage space;
   entrance or exit of physical items into or out of the storage space; and
   transport vehicles for transporting physical items to or away from the storage site, the transport vehicle being at an entrance or exit point and/or a yard of the storage site.
Clause F6. The computer-implemented method of one or more of clauses F1-F5, wherein the real-life state of the storage site comprises a present state of the storage site.
Clause F7. The computer-implemented method of one or more of clauses F1-F6, wherein the real-life state of the storage site comprises a past state of the storage site.
Clause F8. The computer-implemented method of one or more of clauses F1-F3, comprising simulating a future state of the virtual storage system based on the parameter set.
Clause F9. The computer-implemented method of clause F8, comprising determining whether the future state of the virtual storage system meets a set of predetermined requirements.
Clause F10. The computer-implemented method of one or more of clauses F1-F9, comprising simulating a future state of the storage site based on the real-life state.
Clause F11. The computer-implemented method of one or more of clauses F1-F10, wherein the virtual state of the virtual storage system is updated corresponding to changes in the real-life state of the storage site.
Clause F12. The computer-implemented method of clause F11, wherein the real-life state is the real-time state of the storage site and the virtual state of the virtual storage system is real-time updated corresponding to changes in the real-time state of the storage site.
Clause S1. The computer implemented method of any preceding clause, further comprising:
   receiving a system requirement for the virtual storage system;
   determining whether the virtual storage system fulfils the requirement; and
   generating a flag when it is determined that the virtual storage system does not fulfil the requirement.
Clause S2. The computer implemented method of clause S1, wherein the requirement comprises a safety requirement for the virtual storage system.
Clause S3. The computer implemented method of clause S1 or S2, wherein the flag comprises an identifier of a location in the virtual storage system at which the requirement is not fulfilled.
Clause S4. The computer implemented method according to any of clauses S1 to S3, wherein the flag comprises an instruction to modify the virtual storage system.
Clause S5. The computer implemented method according to any of clauses S1 to S4, further comprising displaying the flag to a user.
Clause S6. The computer implemented method of clause S4 or clause S5, further comprising:
   receiving, responsive to the flag, a user input indicating a user modification to the virtual storage system, and
   adjusting the virtual storage system according to the user modification.
Clause S7. The computer implemented method of clause S6, wherein the adjusting comprises one or more of:
   adjusting, based on the user input, a virtual dimension of the virtual storage system;
   adjusting, based on the user input, a virtual dimension of a virtual column;
   adjusting, based on the user input, a virtual shape of the virtual frame;
   repositioning, based on the user input, the virtual storage system on the displayed representation; and/or
   selecting, based on the user input, a virtual robotic container-handling vehicle for the virtual storage system.
Clause S8. A computer implemented method according to any preceding clause, further comprising:
   displaying, to a first user, the virtual storage system synchronously overlaying the representation of the storage site;
   displaying, to a second user, the virtual storage system synchronously overlaying the representation of the storage site;
   receiving, from the first user, a user input indicating a user modification to the virtual storage system;
   adjusting the virtual storage system according to the user modification; and
   transmitting, to the second user, the adjustment to the virtual storage system.
Clause S9. The computer implemented method of clause S8, wherein the first user is responsible for modifying the virtual storage system to optimise a first class of system requirement, and wherein the second user is responsible for modifying the virtual storage system to optimise a second class of system requirement which is different from the first class of system requirement.
Clause S10. The computer implemented method of clause S9, wherein each of the first class and the second class of system requirements comprises a system safety requirement.
Clause S11. The computer implemented method according to any of clauses S8 to S10, wherein the adjusting comprises one or more of:
   adjusting, based on the user input, a virtual dimension of the virtual storage system;
   adjusting, based on the user input, a virtual dimension of a virtual column;
   adjusting, based on the user input, a virtual shape of the virtual frame;
   repositioning, based on the user input, the virtual storage system on the displayed representation; and/or
   selecting, based on the user input, a virtual robotic container-handling vehicle for the virtual storage system.
Clause S12. The computer implemented method according to any of clauses S8 to S11, further comprising:
   determining that the first user is modifying the virtual storage system; and
   preventing the second user from modifying the virtual storage system while the first user is modifying the virtual storage system.
Clause X1. A method of providing an automated storage and retrieval system for a storage site, the method comprising:
   designing the automated storage and retrieval system according to the computer-implemented method of any of clauses A1-S12, wherein the automated storage and retrieval system corresponds to the virtual storage system; and
   assembling the automated storage and retrieval system.
Clause X2. The method of clause X1, wherein assembling the automated storage and retrieval system comprises assembling the automated storage and retrieval system based on a bill of materials produced in accordance with any of clauses M1 to M15.
Clause Y1. A computer-readable medium comprising instructions which, when executed by a processor of a computing system, cause the computing system to perform the method of any of clauses A1-S12.
Clause Z1. A computing system for controlling an automated storage and retrieval system, the computing system comprising:
   one or more processors; and
   a memory in communication with the one or more processors, the memory storing instructions that when executed by the one or more processors cause the computing system to perform the method of any of clauses A1-S12.

## Claims

1. A computer-implemented method for designing an automated storage and retrieval system at a storage site, the method comprising:
capturing a material dimension of the storage site,
generating a virtual storage system based on the material dimension,
displaying, to a user, the virtual storage system synchronously overlaying a representation of the storage site, the virtual storage system comprising a virtual frame delineating a plurality of virtual storage columns for receiving virtual stacks of storage containers, wherein the representation portrays the material dimension.

2. The computer implemented method of claim 1, further comprising:
receiving a system requirement for the virtual storage system;
determining whether the virtual storage system fulfils the requirement; and
generating a flag when it is determined that the virtual storage system does not fulfil the requirement.

3. The computer implemented method of claim 2, wherein the requirement comprises a safety requirement for the virtual storage system.

4. The computer implemented method according to claim 2 or claim 3, further comprising:
displaying the flag to a user,
receiving, responsive to the flag, a user input indicating a user modification to the virtual storage system, and
adjusting the virtual storage system according to the user modification.

5. The computer implemented method according to claim 1, further comprising:
displaying, to a first user, the virtual storage system synchronously overlaying the representation of the storage site;
displaying, to a second user, the virtual storage system synchronously overlaying the representation of the storage site;
receiving, from the first user, a user input indicating a user modification to the virtual storage system;
adjusting the virtual storage system according to the user modification; and
transmitting, to the second user, the adjustment to the virtual storage system.

6. The computer implemented method according to claim 5, further comprising:
determining that the first user is modifying the virtual storage system; and
preventing the second user from modifying the virtual storage system while the first user is modifying the virtual storage system.

7. The computer-implemented method of any preceding claim, wherein the virtual storage system further comprises a plurality of virtual robotic container-handling vehicles and the method further comprises:
displaying a simulated operation of the virtual storage system based on a set of simulation conditions, the simulated operation comprising routing each virtual robotic container-handling vehicle respectively between a source virtual storage column and a destination virtual storage column, wherein, for each virtual robotic container-handling vehicle, the source virtual storage column and the destination virtual storage column are selected based on the set of simulation conditions,
identifying whether a virtual robotic container-handling vehicle is obstructed when routed between the respective source virtual storage column and the respective destination virtual storage column, and
outputting, to the user, a modification suggestion to resolve the obstructed virtual robotic container-handling vehicle.

8. The computer-implemented method of any preceding claim, wherein:
the virtual storage system is in a virtual state in said displaying, to the user, the virtual storage system synchronously overlaying a representation of the storage site; and
the method comprises:
determining a parameter set of values of one or more than one simulation parameter from a real-life state of the storage site, and
determining the virtual state based on the parameter set,
wherein said displaying, to the user, the virtual storage system synchronously overlaying a representation of the storage site comprises:
overlaying the representation of the storage site with a graphical representation of one or more than one values of attributes of the real-life state.

9. The computer-implemented method of claim 8, further comprising:
receiving data from a warehouse management system by a processing system performing the method, the warehouse management system controlling and/or tracking operations in the storage site, the data representing determined one or more than one of the attributes of the real-life state.

10. The computer-implemented method of any preceding claim, the method further comprising:
generating a bill of materials comprising a listing of components of the virtual storage system corresponding to material components that would be required to assemble the automated storage and retrieval system, and
displaying the bill of materials concurrently with the displayed virtual storage system.

11. The computer-implemented method of claim 10, wherein the displaying comprises automatically updating the bill of materials responsive to a change of the virtual storage system.

12. The computer-implemented method of claim 10 or claim 11, the method further comprising receiving a user input indicating a user modification to the bill of materials, and responsive thereto providing an indication of a corresponding suggested change in the displayed virtual storage system.

13. A method of providing an automated storage and retrieval system for a storage site, the method comprising:
designing the automated storage and retrieval system according to the computer-implemented method of any of claims 1-12, wherein the automated storage and retrieval system corresponds to the virtual storage system; and
assembling the automated storage and retrieval system.

14. A computer-readable medium comprising instructions which, when executed by a processor of a computing system, cause the computing system to perform the method of any of claims 1-12.

15. A computing system for controlling an automated storage and retrieval system, the computing system comprising:
one or more processors; and
a memory in communication with the one or more processors, the memory storing instructions that when executed by the one or more processors cause the computing system to perform the method of any of claims 1-12.
